# EUROPÄISCHE PATENTSCHRIFT

(11) **EP 3 160 246 B1**
(45) Veröffentlichungstag und Bekanntmachung des Hinweises auf die Patenterteilung: **28.08.2024**
(21) Anmeldenummer: 15729810.0
(22) Anmeldetag: 15.06.2015
(51) Int. Cl.: A23L 11/50, A23L 11/60, A23L 9/10, A23C 20/02, A23L 29/10, A23L 33/185

(54) **EMULSION MIT LUPINENPROTEIN, DEREN VERWENDUNG UND HERSTELLUNG**
LUPINE PROTEIN-CONTAINING EMULSION, USE AND PRODUCTION THEREOF
ÉMULSION AVEC LA PROTÉINE DE LUPIN, SON UTILISATION ET PRODUCTION

(30) Priorität: 30.06.2014 DE 102014009676
(43) Veröffentlichungstag der Anmeldung: 03.05.2017
(73) Patentinhaber: Prolupin GmbH, 18507 Grimmen (DE)
(72) Erfinder: EISNER, Peter, 85354 Freising (DE); FISCHL, Regina, 85354 Freising (DE); MITTERMAIER, Stephanie, 85368 Moosburg (DE); ZACHERL, Christian, 85356 Freising (DE); TOELSTEDE, Simone, 80805 München (DE); JACOBS, Dorothee, 01309 Dresden (DE); SCHREIBER, Klaus, 85356 Freising (DE); HICKISCH, Andrea, 81379 München (DE)
(74) Vertreter: Witte, Weller & Partner Patentanwälte mbB
(86) Internationale Anmeldenummer: PCT/EP2015/063273
(87) Internationale Veröffentlichungsnummer: WO 2016/000939

(56) Entgegenhaltungen:
- EP-A1- 1 405 572
- WO-A1-2004/093560
- WO-A1-2006/003110
- WO-A1-2010/124870
- WO-A2-2006/076889
- DE-A1- 19 640 992
- DE-C- 348 755
- DATABASE GNPD [online] MINTEL; 5 December 2013 (2013-12-05), ANONYMOUS: "Almond Speculoos Flavoured Yoghurt", XP055634807, retrieved from www.gnpd.com Database accession no. 2237966
- DATABASE GNPD [online] MINTEL; 15 January 2007 (2007-01-15), ANONYMOUS: "Lemon and Quark Pudding", XP055634818, retrieved from www.gnpd.com Database accession no. 636431
- EVDOXIA M PAPALAMPROU ET AL: "Effect of medium molecular weight xanthan gum in rheology and stability of oil-in-water emulsion stabilized with legume proteins", vol. 85, no. 12, 1 September 2005 (2005-09-01), pages 1967 - 1973, XP002681880, ISSN: 0022-5142, Retrieved from the Internet <URL:http://onlinelibrary.wiley.com/doi/10.1002/jsfa.2159/pdf> [retrieved on 20050504], DOI: 10.1002/JSFA.2159
- F.W. SOSULSKI ET AL: "Legume-Based Imitation and Blended Milk Products", CANADIAN INSTITUTE OF FOOD SCIENCE AND TECHNOLOGY JOURNAL, vol. 11, no. 3, 1 July 1978 (1978-07-01), pages 117 - 123, XP055203460, ISSN: 0315-5463, DOI: 10.1016/S0315-5463(78)73224-4
- LQARI H ET AL: "Lupinus angustifolius protein isolates: chemical composition, functional properties and protein characterization", FOOD CHEMISTRY, ELSEVIER LTD, NL, vol. 76, no. 3, 1 March 2002 (2002-03-01), pages 349 - 356, XP027374914, ISSN: 0308-8146, [retrieved on 20020301]

## Beschreibung

### Anwendungsgebiet

Die vorliegende Erfindung betrifft eine Emulsion, die wenigstens Lupinenprotein und in Wasser emulgiertes pflanzliches Fett enthält, sowie ein Verfahren zur Herstellung der Emulsion. Eine derartige Emulsion lässt sich zu Lebensmittelprodukten wie beispielsweise Lupinenpudding, Lupinenjoghurt oder Lupinenfrischkäse weiterverarbeiten.

### Stand der Technik

Bekannt sind beispielsweise Emulsionen wie Soja- und Hafermilch, die aus ganzen Samen bzw. Rohstoff hergestellt wurden. Hierfür werden beispielsweise Sojabohnen in Wasser vermahlen und das enthaltene Fett mit den Proteinen emulgiert. Anschließend werden unlösliche Bestandteile durch Zentrifugation abgetrennt. Die dabei entstehende Emulsion kann als Milchersatzprodukt zum Einsatz kommen.

Für Lupinensamen ist ein ähnliches Verfahren in der EP 0449396 A1 beschrieben. Hierbei werden die Lupinensamen vorgequollen und die entstehende evtl. mit weiterem Wasser versetzte "Slurry" bei Raumtemperatur abgepresst, um eine Emulsion aus Lupinenprotein und -fett zu erhalten. Aufgrund der in den Saaten enthaltenen sekundären Pflanzenstoffe und Fettoxidationsprodukte weisen diese Emulsionen einen typisch pflanzlichen Aroma-und Geschmackseindruck auf und werden daher von vielen Konsumenten abgelehnt. Auch besitzen diese Emulsionen eine sehr gelbe und stark von Kuhmilch abweichende Farbe, die durch das in den Lupinen enthaltene Fett hervorgerufen wird.

In der WO 2008/118129 A1 wird ein Grundstoff für Getränke aus Lupinensaat beschrieben. Zusätzlich zu den zuvor erwähnten Schritten wird dabei in einer der beschriebenen Ausgestaltungen noch ein Erhitzungsschritt der Suspension bei 85°C für 20 min und anschließender Hocherhitzung mittels Dampfinjektion bei 140°C für 2 Sekunden durchgeführt, um bohnige "Off-flavours" zu reduzieren und die Haltbarkeit zu erhöhen. Aufgrund der Tatsache, dass bei diesem Verfahren das saateigene Fett enthalten ist, welches einen erhöhten Anteil an ungesättigten Fettsäuren enthält, wird dieses durch den Erhitzungsschritt thermisch geschädigt. Hierdurch entstehen Fettoxidationsprodukte und Transfettsäuren, welche erneut zu deutlichen negativen Aromaeindrücken führen können. Zudem zeigt sich in Versuchen, bei denen das Verfahren der WO 2008/118129 A1 eingesetzt wurde, dass Lupinenproteine aus der Lösung ausfallen, wenn die Temperatur über 90°C angehoben wird.

In der WO 2004/093560 A1 wird die Herstellung einer protein-angereicherten Grundmischung aus Lupinensamen beschrieben, die aus nicht entöltem Lupinenmehl durch Extraktion im alkalischen, anschließende Fällung und Solubilisieren des Proteins gewonnen wird. Durch Verdünnen und Zusätze wie Fett, Zucker und färbende Ingredienzien wird eine Art Lupinenmilch hergestellt, aus der wiederum weitere Produkte entwickelt werden können. In Versuchen mit diesem Verfahren zeigt sich, dass die so gewonnene "Lupinenmilch" eine gelbliche Farbe aufweist und bei einer sensorischen Bewertung intensive "bohnige" und "grasige" Aromaeindrücke wahrgenommen werden. Die daraus gewonnenen Produkte haben mit konventionellen Milchprodukten sowohl optisch als auch geschmacklich kaum eine Ähnlichkeit.

In der WO 2010/124870 wird ein Verfahren zur Herstellung einer ÖI-in-Ware-Emulsion beschrieben, die Lupinenprotein, Polysaccharid, Öl bzw. Fett und ggf. Wasser enthält.

Bei den bislang angeführten Verfahren werden vollfette und nicht vorbehandelte Lupinensamen als Rohstoff zur Herstellung von Milch bzw. einer entsprechenden Basis zur weiteren Lebensmittelherstellung eingesetzt. Diese haben neben dem erwähnten negativen sensorischen Eintrag weiterhin den Nachteil, dass saateigene antinutritive wasserlösliche Inhaltsstoffe (wie z.B. Oligosaccharide, Bitterstoffe) und an der Fettphase anhaftende fettlösliche und/oder amphiphile Komponenten der Lupinensamen in die entsprechend daraus hergestellten Produkte übergehen.

Zur Reduktion der störenden Aroma- und Geschmacksnoten in Lupinenproteinprodukten, die keine Lupinenöle enthalten, sind weitere Verfahren beschrieben. Neben der Fermentation, wie z.B. in der WO 2004/034806 A1, sind dies thermische Verfahren zur Verbesserung des Geschmacks von Lupinenproteinen, vielfach in Kombination mit dem Zusatz von Zuckern, wie dies beispielsweise in der WO 2008/089734 A1 beschrieben ist. Allerdings denaturieren die Proteine bei Temperaturen über 95 °C zumindest teilweise und verlieren dabei einen Teil ihrer funktionellen Eigenschaften. Gerade die sehr gut emulgierenden Globuline der Lupine sind empfindlich gegenüber hohen Temperaturen und verlieren nach der thermischen Behandlung ihre guten emulgierenden Eigenschaften. Sie agglomerieren in wässrigen Suspensionen oder Lösungen bei Temperaturen über 95 °C, werden als Partikel abgeschieden und stehen damit als Emulgatoren nicht mehr zur Verfügung.

In Folge dessen können anspruchsvolle Emulsionen wie Milch, Pudding, Joghurt und Käse mit thermisch vorbehandelten Lupinenproteinen nicht mehr stabil hergestellt werden.

Somit ist es bislang nicht möglich, aus Lupinenproteinen stabile Emulsionen zu erzeugen, die Kuhmilch sensorisch ähneln und auf deren Grundlage es möglich wird, Milchersatzprodukte herzustellen.

Die Aufgabe der vorliegenden Erfindung besteht darin, eine stabile Emulsion mit Lupinenproteinen (Lupinenmilch) sowie ein Verfahren zur Herstellung anzugeben, die hinsichtlich der rheologischen Eigenschaften, der Farbe und hinsichtlich Geruch und Geschmack einen mit Kuhmilch vergleichbaren Eindruck hervorrufen kann und auf deren Grundlage es gelingt, diverse sensorisch neutrale Milchersatzprodukte bereit zu stellen.

### Darstellung der Erfindung

Die Aufgabe wird mit der Emulsion und dem Verfahren gemäß den Patentansprüchen 1 und 11 gelöst. Vorteilhafte Ausgestaltungen der Emulsion und des Verfahrens sind

Gegenstand der abhängigen Patentansprüche oder lassen sich der nachfolgenden Beschreibung sowie den Ausführungsbeispielen entnehmen.

Die erfindungsgemäße Emulsion zeichnet sich durch einen im Vergleich zu konventionellen Milchersatzprodukten deutlich reduzierten Proteingehalt (Massenanteil) kleiner 3% aus. Trotz des niedrigen Proteingehalts kann die erfindungsgemäße Emulsion einen mit konventionellen Milchersatzprodukten vergleichbaren oder höheren Fettgehalt (Massenanteil) aufweisen. Er ist größer als 3%. Durch diesen erhöhten Fettgehalt, der einfach durch Zusatz von pflanzlichem Fett eingestellt werden kann, wird auch das Mundgefühl der Emulsion verbessert und die Viskosität in einen Bereich zwischen 1 bis 10 mPas bei 20 °C angehoben. Als pflanzliches Fett wird dabei kein Lupinenfett eingesetzt.

Der Begriff des pflanzlichen Fettes umfasst in der vorliegenden Patentanmeldung sowohl feste als auch flüssige Fette (fette Öle). Die flüssigen pflanzlichen Fette werden im Folgenden stellenweise auch als Pflanzenöle bezeichnet.

Die Emulsion eignet sich besonders zur Verwendung als Basis für Milchersatzprodukte.

Bei Verzicht auf den Einsatz von Lupinenfetten und durch den geringen Anteil an Lupinenprotein kann die erfindungsgemäße Emulsion mit einer weißen Farbe, einer milchähnlichen Viskosität und einem neutralen Geschmack und Aroma bereitgestellt werden. Die Emulsion bleibt auch nach einer Erhitzung auf über 95 °C stabil. Besonders vorteilhaft kann sie auf Temperaturen über 120 °C erhitzt werden und verändert ihre homogenen physikalischen Eigenschaften während der Lagerung nicht oder nur geringfügig.

Das Verhältnis an Fettmasse zu Proteinmasse ist in der erfindungsgemäßen Emulsion größer als 2. Darüber hinaus liegt das Fett nach einer entsprechenden Zerkleinerung in der erfindungsgemäßen Emulsion sehr fein dispergiert vor. Die Emulsion ist durch Zerkleinerung der Fettpartikel bei Temperaturen über 30°C mittels eines Homogenisators und Drücken > 200*10³ hPa erhältlich. Die Fettpartikel in der Emulsion weisen eine D90-Partikelgröße (90% der Anzahl der Fettpartikel haben einen kleineren Durchmesser als die angegebene Größe) kleiner 5 µm auf. Überraschenderweise bleibt die Emulsion trotz des geringen Proteingehalts bezogen auf die bei dieser Partikelgröße zur Verfügung stehende große Oberfläche der Fettpartikel stabil und verändert ihre Stabilität auch nach einer thermischen Behandlung nicht. Ebenso haben die Erfinder gefunden, dass die Emulsion bereits ohne thermische Vorbehandlung des Proteins nach der Zerkleinerung der Fettpartikel ein relativ neutrales Aroma-und Geschmacksprofil aufweist. Offensichtlich können sich amphiphile Störaromen aus den Lupinenproteinen bei dieser großen Oberfläche gut an die Fettpartikel / -tröpfchen anlagern und werden für eine retronasale sensorische Wahrnehmung nicht mehr im gleichen Maße freigesetzt wie bei gröberen Partikeln oder höheren Proteingehalten.

Bei der vorgeschlagenen Emulsion ist die D90-Partikelgröße von < 5µm durch die Zerkleinerung der Fettpartikel bei Temperaturen über 30°C mittels Homogenisator bei Drücken über 200*10³ hPa erhältlich. Im Anschluss an die Zerkleinerung wird die Emulsion vorzugsweise auf eine Temperatur über 95 °C erhitzt, vorteilhaft über 110 °C, besonders vorteilhaft über 120 °C. Diese Erhitzung führt zu einer weiteren positiven Veränderung des Geschmacks und Aromaeindrucks des Lupinenproteins, die in den meisten Applikationen erwünscht ist und zu einem milchähnlichen sensorischen Eindruck der Emulsion beiträgt. Trotz der hohen Temperaturen bleibt die erfindungsgemäße Emulsion nach der Erhitzung und der folgenden Abkühlung stabil, auch wenn nach der Erhitzung, anders als in anderen Anwendungen, kein Homogenisierungsschritt mehr erfolgt.

Für den Verzehr der erfindungsgemäßen Emulsion zum Beispiel als Getränk oder als Grundstoff für Produkte wie Joghurt, Pudding oder Frischkäse werden weitere Zutaten zugesetzt wie zum Beispiel Zucker und/oder Aromastoffe und/oder viskositätsbeeinflussende Kohlenhydrate und/oder säureregulierende Phosphate und/oder Mineralstoffe und/oder Vitamine. Zur Vereinfachung der technologischen Abläufe ist es vorteilhaft, die genannten Zutaten der Emulsion zuzusetzen bevor die Homogenisierung und Erhitzung erfolgt.

Es zeigt sich, dass die Emulsion besonders lange stabil bleibt, wenn bei Einsatz einer Menge von kleiner 3 Mass-% Lupinenprotein in der Emulsion der Anteil an alpha- und beta-Conglutin im zugesetzten Protein besonders hoch und der Anteil an gamma-Conglutin entsprechend niedrig ist. Dies kann verfahrenstechnisch bei der Extrahierung des Lupinenproteins zum Beispiel durch Ausfällen der alpha- und beta-Conglutine aus einer im Neutralen oder leicht Alkalischen gewonnenen Proteinlösung erreicht werden.

Dabei verbleiben allerdings zunächst noch 5 bis 10-Mass% an gamma-Conglutin im gefällten Protein. Zur Abreicherung des gamma-Conglutins ist es besonders vorteilhaft, der Proteinextraktion eine saure Vorextraktion des Lupinenrohstoffs (Flakes, Grieß oder Mehl) vorzuschalten, bei der gamma-Conglutin abgetrennt wird. Damit gelingt es, den Anteil an gamma-Conglutin im Lupinenprotein um mehr als die Hälfte auf 2,5 Mass-% oder weniger zu reduzieren und damit den prozentualen Anteil an alpha- und beta-Conglutin in der Emulsion zu erhöhen.

Die saure Vorextraktion wird besonders vorteilhaft nahe dem isoelektrischen Punkt der Lupinenglobuline durchgeführt, der bei verschiedenen Lupinenspezies zwischen pH 4,3 und pH 4,7 variiert. Der Gehalt an alpha- und beta-Conglutin kann noch weiter erhöht werden, wenn die saure Vorextraktion mehr als einmal durchgeführt wird und nach der Extraktion die Extrakte von den Raffinaten durch Fest-Flüssig-Trennverfahren abgetrennt werden. In der DE 19640992 A1 ist beispielhaft beschrieben, wie eine derartig kombinierte saure und alkalische Extraktion nach dem Stand der Technik vorteilhaft durchgeführt werden kann.

Eine weitere Möglichkeit zur Steigerung des Anteils von alpha- und beta-Conglutin und zur Reduktion des Gamma-Conglutins im Lupinenprotein kann durch eine zweifache Proteinextraktion im Gegenstrom erreicht werden. Hierbei wird das Raffinat aus der Proteinextraktion bei einem pH-Wert zwischen 6,5 und 8,0 einer erneuten Extraktion bei gleichem oder ähnlichem pH-Wert unterzogen. Der Extrakt der zweiten Extraktion des Raffinats kommt dann in der ersten Proteinextraktion des nächsten Rohstoffs zum Einsatz. Erst nach der zweiten Extraktion wird der Extrakt aus dem System ausgetragen und das Protein z.B. durch Ausfällen aufkon-zentriert. Auch durch diese Gegenstromführung wird der Anteil an alpha- und beta-Conglutin im gefällten Protein erhöht.

Je nach Applikation und Weiterverarbeitung der Emulsion kann der Schwerpunkt der Aufarbeitung auf die Sensorik oder die Technofunktionalität der hergestellten Emulsion gelegt werden. So wird eine sensorisch noch neutralere Emulsion erhalten, wenn das Lupinenprotein vor dem Verarbeiten zu der erfindungsgemäßen Emulsion getrocknet wird. Durch diesen Schritt werden viele flüchtige Aromen mit der Wasserphase vom Protein abgetrennt. Eine höhere Funktionalität der Lupinen-proteine zeigt sich allerdings, wenn das Protein vor dem Einsatz in der erfindungsgemäßen Emulsion nicht getrocknet wird und in feuchter Form verarbeitet wird. Somit kann es vorteilhaft sein, das feuchte Protein aus der Extraktion und Fällung gelöst oder suspendiert in Wasser für die Herstellung der Emulsion zu verwenden, weil damit der Proteingehalt bei gleicher Emulgierwirkung in der erfindungsgemäßen Emulsion noch weiter gesenkt werden kann. Die Protein-WasserSuspension kann dabei sowohl in flüssig-pastöser Form vorliegen oder als Feststoff in gefrorenem Zustand.

Eine weitere sensorische Verbesserung der erfindungsgemäßen Emulsion kann erzielt werden, wenn die Lupinensamen vor der Abtrennung des Proteins einer Behandlung mit überkritischem CO₂ oder Ethanol ausgesetzt werden. Dabei werden erhebliche Mengen an Carotinoiden aus dem Rohstoff abgetrennt, so dass eine tendenzielle Gelbfärbung der erfindungsgemäßen Emulsion unterdrückt und eine milchähnliche Farbe erhalten wird. Ein Farbvergleich der erfindungsgemäßen Emulsion (Lupinenmilch), die aus Lupinenprotein gewonnen wurde, das vor der Extraktion einer CO₂-Behandlung ausgesetzt war, im Vergleich zu einer Lupinenmilch nach der WO 2004/093560 A1, die aus vollfetten Lupinenrohstoffen extrahiert wurde, zeigt deutlich die milchähnliche weiße Farbe der erfindungsgemäßen Emulsion gegenüber der gelben Vergleichsemulsion.

Besonders vorteilhaft weist die erfindungsgemäße Emulsion einen pH-Wert größer 6,5 und besonders vorteilhaft größer 7,5 auf. Dabei und bei gleichzeitiger Anwesenheit von Phosphaten oder anderen Stabilisatoren in der Emulsion gelingt es, ein Ausflocken des Lupinenproteins auch bei Zusatz der Emulsion in heiße und saure Getränke (z.B. Kaffee) zu vermeiden und ein vollmundiges Aromaprofil zu erzielen.

### Kurze Beschreibung der Zeichnungen

Im Folgenden werden die erfindungsgemäße Emulsion sowie das zugehörige Verfahren beispielhaft anhand von Ausführungsbeispielen in Verbindung mit den Zeichnungen nochmals erläutert. Hierbei zeigen:
- Fig. 1: ein erstes Beispiel für den Verfahrensablauf bei dem vorgeschlagenen Verfahren; und
- Fig. 2: ein zweites Beispiel für den Verfahrensablauf bei dem vorgeschlagenen Verfahren.

### Ausführungsbeispiele

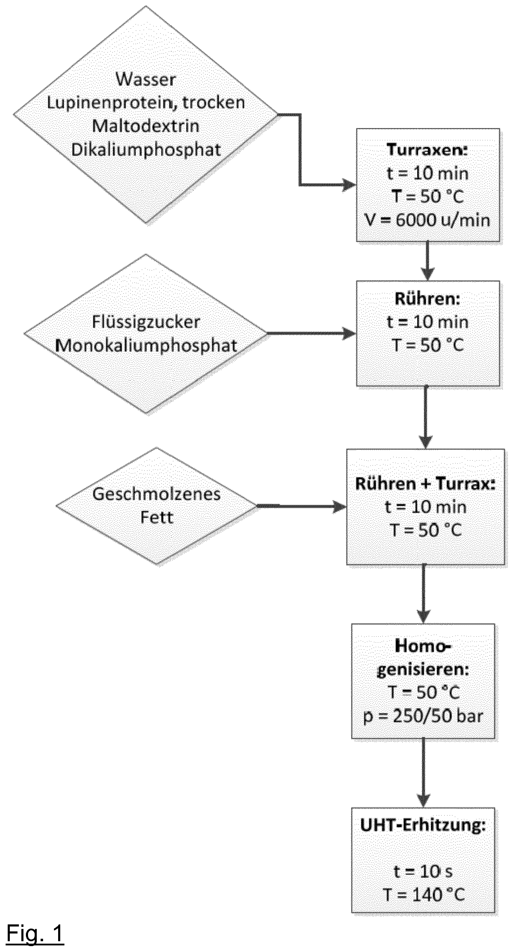

Im Beispiel der Figur 1 wird zur Herstellung der erfindungsgemäßen Emulsion zunächst aus Lupinensamen extrahiertes und anschließend sprühgetrocknetes Lupinenprotein mit Maltodextrin, Dikaliumphosphat und Wasser vermischt. Die Vermischung erfolgt mit einer Dispergiereinheit, beispielsweise mit einem Turrax^{®} mit V = 6000 u/min, bei einer Temperatur von T = 50°C für t = 10 min. Anschließend werden Flüssigzucker und Monokaliumphosphat der Mischung zugegeben und für t = 10 min bei T = 50°C verrührt. Im nächsten Schritt erfolgt die Zugabe von geschmolzenem Fett, das ebenfalls bei T = 50°C für t = 10 min verrührt und mit Hilfe der Dispergiereinheit gut mit der bestehenden Mischung vermischt wird. Es folgt ein Homogenisierungsschritt bei T = 50°C und einem Druck p von p = 250/50*10³ hPa (250/50 bar). Abschließend wird die Emulsion für t = 10s auf eine Temperatur T = 140°C ultrahocherhitzt.

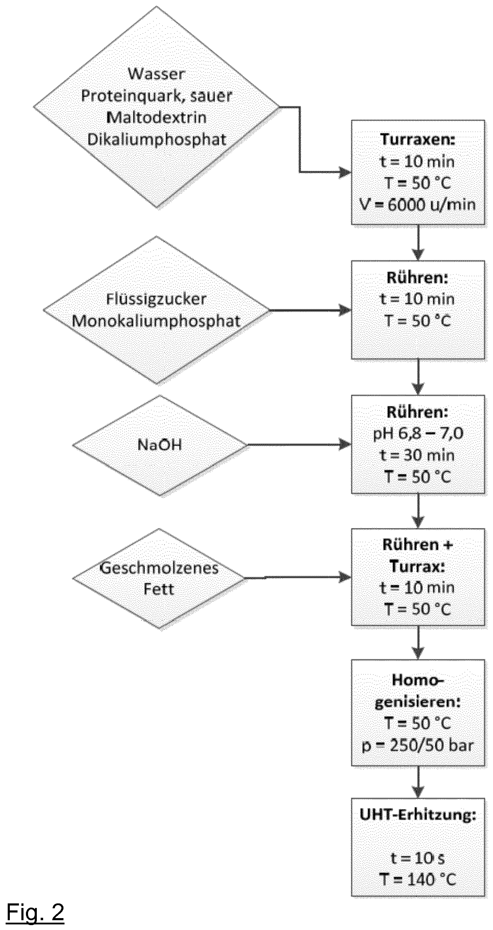

Im Beispiel der Figur 2 wird zur Herstellung der erfindungsgemäßen Emulsion ein aus Lupinensamen extrahiertes Lupinenprotein in noch feuchter Form, d.h. als saurer Proteinquark, mit Maltodextrin, Dikaliumphosphat und Wasser vermischt. Die Vermischung erfolgt auch hier mit einem Turrax^{®} mit V = 6000 u/min bei einer Temperatur von T = 50°C für t = 10 min. Anschließend werden Flüssigzucker und Monokaliumphosphat der Mischung zugegeben und für t = 10 min bei T = 50°C verrührt. Zur Neutralisierung des durch den sauren Proteinquark verursachten sauren pH-Wertes der Mischung wird als nächstes Natronlauge zugegeben und für t = 30 min bei T = 50° C verrührt. Die Menge an Natronlauge wird so gewählt, dass ein pH-Wert der Mischung von 6,8 bis 7,0 erreicht wird. Im nächsten Schritt erfolgt dann die Zugabe von geschmolzenem Fett, das ebenfalls bei T = 50°C für t = 10 min verrührt und mit Hilfe des Turrax gut mit der bestehenden Mischung vermischt wird. Es folgt ein Homogenisierungsschritt bei T = 50°C und einem Druck p von p = 250/50*10³ hPa (250/50 bar). Abschließend wird die Emulsion für t = 10s auf eine Temperatur T = 140°C ultrahocherhitzt.

Die zugegebenen Mengen an Lupinenprotein und Fett werden so gewählt, dass im vorliegenden Beispiel ein Massenanteil des Proteins in der Emulsion von 1,8 % und ein Massenanteil des Fettes von 4 % erreicht werden. Bei dem vorgeschlagenen Verfahren wird dabei jeweils reines Lupinenprotein, d.h. Protein ohne Anteile von Lupinenfett, zur Herstellung der Emulsion genutzt. Als Fette werden beispielsweise Palmfett oder Kokosfett zugegeben.

Folgende Tabelle zeigt eine beispielhafte Zusammensetzung der erfindungsgemäßen Emulsion:

| **Zutat** | **Anteil Mass-%** |
|---|---|
| Protein | 1,8 |
| Fett | 4 |
| Zucker | 1 |
| Maltodextrin | 4,5 |
| Mineralstoffe | 1 |
| Wasser | >87 |

Obwohl die hergestellte Emulsion aus Carotinonid-haltigen Lupinenproteinen besteht, weist sie eine fast weiße Farbe auf. Ihr L*-Wert (Definition siehe L*a*b*-Farbraum) ist größer gleich 88, im Vergleich dazu hat Kuhmilch einen L*-Wert von etwa 90. Es werden gegenüber Kuhmilch unmerkliche Δ E Farbabstände von 1-2 erreicht. So liegen Δ E Farbabstände von Sojamilch (L*-Werte zwischen 50 bis zu 80) zu Kuhmilch häufig oberhalb von 5, wobei ein Farbabstand in dieser Größenordnung in der Literatur bei Milch als abweichende Farbe bewertet wird (vgl. Popov-Raljić et al., 2008 Color Changes of UHT Milk During Storage. Sensors Vol: 8(9)).

Die erfindungsgemäße Emulsion weist mit einem Fett zu Protein Verhältnis von 2 nach der Erhitzung auf > 110 °C und während der anschließenden Lagerung trotz der geringen Viskosität von kleiner 10 mPas über viele Tage eine erstaunliche Stabilität auf. Überraschenderweise trennen sich bei der Emulsion nach einer Lagerung von 10 Tagen bis 8 Wochen keine oder nur sehr geringe Feststoffanteile ab, selbst wenn als Emulgatoren ausschließlich Lupinenproteine zum Einsatz kommen. In Versuchen mit dieser Emulsion zeigte sich, dass auch nach der Erhitzung auf eine Temperatur von 140 °C kaum ein Abtrennen von Fett oder Protein während der Lagerung von 10 Tagen zu erkennen war. So lag der Anteil an abgeschiedenen Feststoffen aus der erfindungsgemäßem Emulsion bei weniger als 10% des in der Emulsion enthaltenen Feststoffs. In einigen Fällen lag der abgeschiedene Feststoff unter 2% nach einer Lagerdauer von 10 Tagen bei 4 °C. Auch bei einer Lagerung von 8 Wochen wurden vergleichbare Resultate erhalten.

Neben der beschriebenen Lupinenmilch als Ausführung der erfindungsgemäßen Emulsion gelingt es durch weitere Verarbeitung, eine Vielzahl von wohlschmeckenden Milchersatzprodukten aus der Emulsion zu gewinnen. Im Folgenden werden einige Beispiele angeführt.

### Lupinen-Vanillepudding:

| **Zutat** | **[%]** |
|---|---|
| Lupinenmilch | 87 |
| Stärke | 6 |
| Zucker | 7 |

Für die Herstellung eines Puddings aus Lupinenmilch wurde Speisestärke und Zucker vermischt. Zur Erzielung einer bestimmten Geschmacksrichtung können zusätzlich beispielsweise Kakaopulver oder Aromen zugesetzt werden. Zur Erzielung einer noch cremigeren Textur, zur Erzielung einer gelblicheren Farbe oder zur Erhöhung des Proteingehalts kann der trockenen Mischung aus Speisestärke und Zucker zusätzlich Lupinenproteinisolat zugemischt werden.

Die Emulsion bzw. Lupinenmilch wurde aufgekocht, anschließend von der Kochstelle genommen und die Stärkemischung eingerührt. Anschließend wurde die Masse unter Rühren weiterhin 1 Minute gekocht und abgefüllt. Eine weitere Variante zur Herstellung von Lupinenpudding erfolgte direkt mit den einzelnen Zutaten, die in der Lupinenmilch enthalten sind, zusammen mit den weiteren Zutaten, die zusätzlich im Pudding zum Einsatz kommen. Aber auch hier war es erforderlich, die Mischung auf eine Temperatur von über 95°C zu erhitzen und die Fettpartikel durch intensives Rühren zu zerkleinern, um die gewünschten sensorischen Effekte zu erzielen.

### Lupinenioghurt:

Die erfindungsgemäße Emulsion kann für die Herstellung von joghurtähnlichen Produkten eingesetzt werden. Der Zucker-, Fett- und Proteingehalt der Milch kann dafür entsprechend angepasst werden (Trockensubstanz: 10 - 18 %). Für den Zusatz weiterer Zutaten kann die Milch erneut erhitzt werden, falls es sich um im Heißen besser lösliche Komponenten handelt. Die Lupinenmilch (20 - 45 °C) wird anschließend mit Milchsäurebakterien inokuliert und bis zum Erreichen von pH 4,3 ± 0,2 bei 30 - 40 °C fermentiert. Anschließend erfolgt eine Kühlphase von 24 h bei 1-4 °C. Während der Fermentation und der Kühlphase wird der Joghurt möglichst bewegungsfrei gelagert. Sowohl stichfeste, als auch gerührte Joghurts können so hergestellt werden. Für gerührte Joghurts wird der Joghurt nach der Kühlphase zusätzlich gerührt und ggf. mit Fruchtzubereitungen oder Aromen versetzt.

### Herstellung von Lupinenfrischkäse

Die erfindungsgemäße Emulsion kann ebenfalls für die Herstellung von frischkäseähnlichen Produkten verwendet werden. Dabei kann der Trockensubstanzgehalt der Milch vorteilhaft durch Zugabe von Fett oder Protein erhöht werden. Darüber hinaus können Verdickungsmittel oder viskositätserhöhende Substanzen (z.B. Citrusfasern) sowie Mineralstoffe zugesetzt werden, um das Mundgefühl und die Sensorik des Frischkäses zu verbessern. Für die Herstellung von Frischkäse wird die erfindungsgemäße Lupinenmilch bei 20-45°C mit Milchsäurekulturen inokuliert und bis zum Erreichen von < pH 4,5 bei 30 °C-40 °C fermentiert. Anschließend wird die entstandene Molke vom sogenannten Bruch (koagulierte Emulsion) getrennt. Das erhaltene frischkäseähnliche Produkt wird abgefüllt, evtl. mit Aromen und Gewürzen bzw. weiteren Stabilisatoren versetzt, falls benötigt nochmals wärmebehandelt und anschließend bei Temperaturen zwischen 1 und 6 °C gelagert.

Das frischkäseähnliche Produkt kann darüber hinaus mit weiteren Kulturen (z.B. Schimmelpilzen) versetzt werden und über mehrere Tage bis Wochen gereift werden. Durch die Reifung können Schnitt-, Weich- oder Hartkäse-ähnliche Produkte hergestellt werden.

## Patentansprüche

1. Emulsion mit Lupinenprotein, die wenigstens Lupinenprotein und in Wasser emulgiertes pflanzliches Fett enthält,
wobei das Lupinenprotein einen Massenanteil in der Emulsion aufweist, der < 3 % beträgt, das pflanzliche Fett einen Massenanteil in der Emulsion aufweist, der > 3 % beträgt, und ein Verhältnis von Fettmasse zu Proteinmasse in der Emulsion > 2 beträgt,
**dadurch gekennzeichnet,**
**dass** ein Massenanteil von Lupinenfetten in der Emulsion unter 0,2 % beträgt, und
**dass** die Emulsion durch Zerkleinerung der Fettpartikel bei Temperaturen über 30°C mittels eines Homogenisators und Drücken > 200*10³ hPa erhältlich ist

2. Emulsion nach Anspruch 1,
**dadurch gekennzeichnet,**
**dass** ein Massenanteil von alpha- und beta-Conglutin ≥ 80 % und ein Massenanteil an gamma-Conglutin im Lupinenprotein zwischen 1 und 10 % beträgt.

3. Emulsion nach Anspruch 1 oder 2,
**dadurch gekennzeichnet,**
**dass** ein Massenanteil von gamma-Conglutin im Lupinenprotein ≤ 2,5 % beträgt.

4. Emulsion nach einem der Ansprüche 1 bis 3,
**dadurch gekennzeichnet,**
**dass** die Emulsion keine Lupinenfette enthält, wobei vorzugsweise das pflanzliche Fett ein raffiniertes Fett, insbesondere Palmfett und/oder Kokosfett, ist.

5. Emulsion nach einem der Ansprüche 1 bis 4,
**dadurch gekennzeichnet,**
**dass** die Emulsion eine Viskosität aufweist, die bei einer Temperatur von 20° C zwischen 1 mPas und 10 mPas beträgt.

6. Emulsion nach einem der Ansprüche 1 bis 5,
**dadurch gekennzeichnet,**
**dass** die Emulsion einen pH-Wert von > 6,5, besonders bevorzugt von > 7,5, aufweist.

7. Emulsion nach einem der Ansprüche 1 bis 6,
**dadurch gekennzeichnet,**
**dass** die Emulsion einen Massenanteil von > 87 % an Wasser aufweist.

8. Emulsion nach einem der Ansprüche 1 bis 7,
**dadurch gekennzeichnet,**
**dass** die Emulsion zusätzlich Zucker und/oder Aromastoffe und/oder viskositätsbeeinflussende Kohlenhydrate und/oder säureregulierende Phosphate und/oder Mineralstoffe und/oder Vitamine enthält.

9. Verwendung der Emulsion nach einem der Ansprüche 1 bis 8 zur Herstellung eines Produktes, insbesondere eines Lebensmittelproduktes.

10. Verwendung nach Anspruch 9, wobei das Produkt ausgewählt ist aus der Gruppe bestehend aus: Joghurt, Pudding und Frischkäse.

11. Verfahren zur Herstellung einer Emulsion nach einem oder mehreren der Patentansprüche 1 bis 8, bei dem Lupinenprotein mit Wasser und pflanzlichem Fett vermischt wird,
wobei das pflanzliche Fett bei dem Mischvorgang durch mechanischen Energieeintrag zerkleinert wird, um die Emulsion zu bilden,
wobei ein Massenanteil des Lupinenproteins in der Emulsion < 3 % gewählt wird, **dadurch gekennzeichnet,**
**dass** pflanzliches Fett für die Herstellung der Emulsion verwendet wird, das kein Fett aus Lupinensaaten enthält, wobei
das Wasser für den Mischvorgang auf Temperaturen > 30°C, vorzugsweise > 45°C, aufgeheizt wird, und der Mischvorgang mit einem Homogenisator bei Drücken > 200*10³ hPa, vorzugsweise > 300*10³ hPa, erfolgt.

12. Verfahren nach Anspruch 11,
**dadurch gekennzeichnet,**
**dass** die Emulsion nach dem Mischvorgang auf eine Temperatur > 95°C, vorzugsweise > 119°C, weiter vorzugsweise > 120°C, erhitzt und anschließend abgekühlt wird.

13. Verfahren nach einem der Ansprüche 10 bis 12,
**dadurch gekennzeichnet,**
**dass** Lupinenprotein mit einem Massenanteil von gamma-Conglutin im Lupinenprotein von ≤ 2,5 % und einem Massenanteil von alpha- und beta-Conglutin im Lupinenprotein von ≥ 80 % für die Herstellung der Emulsion verwendet wird.

14. Verfahren nach einem der Ansprüche 10 bis 13,
**dadurch gekennzeichnet,**
**dass** Lupinenprotein für die Herstellung der Emulsion verwendet wird, das aus Lupinensamen extrahiert wurde, die vor Abtrennung des Proteins einer Behandlung mit überkritischem CO₂ oder mit Ethanol unterzogen wurden.

## Claims

1. An emulsion with lupin protein that contains at least lupin protein and plant fat emulsified in water,
wherein the lupin protein has a mass fraction in the emulsion of < 3%, the plant fat has a mass fraction in the emulsion of > 3%, and a ratio of fat mass to protein mass in the emulsion is > 2,
**characterized in**
**that** a mass fraction of lupin fats in the emulsion is less than 0.2%, and the emulsion is obtainable by comminution of the fat particles at temperatures above 30°C using a homogenizer at pressures of > 200*10³ hPa.

2. The emulsion according to claim 1,
**characterized in**
**that** a mass fraction of alpha- and beta-conglutin is ≥ 80% and a mass fraction of gamma-conglutin in the lupin protein is between 1 and 10%.

3. The emulsion according to claim 1 or 2,
**characterized in**
**that** a mass fraction of gamma-conglutin in the lupin protein is ≤ 25%.

4. The emulsion according to any one of claims 1 to 3,
**characterized in**
**that** the emulsion contains no lupin fats, wherein preferably the plant fat is a refined fat, in particular palm fat and/or coconut fat.

5. The emulsion according to any one of claims 1 to 4,
**characterized in**
**that** the emulsion has a viscosity at a temperature of 20°C between 1 mPas and 10 mPas.

6. The emulsion according to any one of claims 1 to 5,
**characterized in**
**that** the emulsion has a pH value of > 6.5, particularly preferably of > 7.5.

7. The emulsion according to any one of claims 1 to 6,
**characterized in**
**that** the emulsion has a mass fraction of > 87% water.

8. The emulsion according to any one of claims 1 to 7,
**characterized in**
**that** the emulsion additionally contains sugar and/or flavorings and/or viscosity-influencing carbohydrates and/or acid-regulating phosphates and/or minerals and/or vitamins.

9. A use of the emulsion according to any one of claims 1 to 8 for the production of a product, in particular a food product.

10. The use according to claim 9, wherein the product is selected from the group consisting of: yogurt, pudding, and cream cheese.

11. A process for producing an emulsion according to one or more of claims 1 to 8, wherein lupin protein is mixed with water and plant fat,
wherein the plant fat is comminuted during the mixing process by mechanical energy input to form the emulsion,
wherein a mass fraction of the lupin protein in the emulsion is selected to be < 3%, **characterized in**
**that** plant fat is used for the production of the emulsion that does not contain fat from lupin seeds, wherein
the water for the mixing process is heated to temperatures of > 30°C, preferably of > 45°C, and the mixing process is carried out with a homogenizer at pressures of > 200*10³ hPa, preferably of > 300*10³ hPa.

12. The process according to claim 11,
**characterized in that**
the emulsion is heated to a temperature of > 95°C, preferably of > 119°C, further preferably of > 120°C after the mixing process and then cooled.

13. The process according to any one of claims 10 to 12,
**characterized in**
**that** lupin protein with a mass fraction of gamma-conglutin in the lupin protein of ≤ 25% and a mass fraction of alpha- and beta-conglutin in the lupin protein of ≥ 80% is used for the production of the emulsion.

14. The process according to any one of claims 10 to 13,
**characterized in**
**that** lupin protein is used for the production of the emulsion, which was extracted from lupin seeds that were subjected to treatment with supercritical CO₂ or ethanol before the protein was separated.

## Revendications

1. Emulsion avec de la protéine de lupin, qui contient au moins de la protéine de lupin et de la graisse végétale en émulsion dans l'eau,
dans laquelle la protéine de lupin présente une fraction massique dans l'émulsion qui est < 3 %, la graisse végétale présente une fraction massique dans l'émulsion qui est > 3 %, et un rapport entre le poids de graisse et le poids de protéine dans l'émulsion est > 2,
**caractérisée en ce**
**qu'**une fraction massique de graisses de lupin dans l'émulsion est inférieure à 0,2 %, et
**que** l'émulsion peut être obtenue par broyage des particules de graisse à des températures supérieures à 30 °C au moyen d'un homogénéisateur et à des pressions > 200*10³ hPa.

2. Emulsion selon la revendication 1,
**caractérisée en ce**
**qu'**une fraction massique de conglutine-α et de conglutine-β est ≥ 80 % et une fraction massique de conglutine-γ dans la protéine de lupin est comprise entre 1 et 10 %.

3. Emulsion selon la revendication 1 ou 2,
**caractérisée en ce**
**qu'**une fraction massique de conglutine-γ dans la protéine de lupin est ≤ 2,5 %.

4. Emulsion selon l'une quelconque des revendications 1 à 3,
**caractérisée en ce**
**que** l'émulsion ne contient aucune graisse de lupin, dans laquelle de préférence la graisse végétale est une graisse raffinée, en particulier de la graisse de palme et/ou de la graisse de coco.

5. Emulsion selon l'une quelconque des revendications 1 à 4,
**caractérisée en ce**
**que** l'émulsion présente une viscosité qui est comprise entre 1 mPas et 10 mPas à une température de 20 °C.

6. Emulsion selon l'une quelconque des revendications 1 à 5,
**caractérisée en ce**
**que** l'émulsion présente une valeur pH > 6,5, de manière particulièrement préférée > 7,5.

7. Emulsion selon l'une quelconque des revendications 1 à 6,
**caractérisée en ce**
**que** l'émulsion présente une fraction massique > 87 % en eau.

8. Emulsion selon l'une quelconque des revendications 1 à 7,
**caractérisée en ce**
**que** l'émulsion contient en supplément du sucre et/ou des substances aromatiques et/ou des glucides ayant une incidence sur la viscosité et/ou des phosphates de régulation des acides et/ou des substances minérales et/ou des vitamines.

9. Utilisation de l'émulsion selon l'une quelconque des revendications 1 à 8 pour fabriquer un produit, en particulier un produit alimentaire.

10. Utilisation selon la revendication 9, dans laquelle le produit est choisi parmi le groupe constitué de : yaourt, pudding et de fromage frais.

11. Procédé de fabrication d'une émulsion selon l'une ou plusieurs des revendications 1 à 8, où de la protéine de lupin est mélangée à de l'eau et de la graisse végétale,
dans lequel la graisse végétale est broyée par un apport d'énergie mécanique lors de l'opération de mélange pour former l'émulsion,
dans lequel une fraction massique de la protéine de lupin dans l'émulsion est choisie < 3 %,
**caractérisé en ce**
**que** la graisse végétale est utilisée pour la fabrication de l'émulsion, laquelle ne contient aucune graisse issue de semences de lupin, dans lequel
l'eau est chauffée, pour l'opération de mélange, à des températures > 30 °C, de préférence > 45 °C, et l'opération de mélange est effectuée avec un homogénéisateur à des pressions > 200*10³ hPa, de préférence > 300*10³ hPa.

12. Procédé selon la revendication 11,
**caractérisé en ce**
**que** l'émulsion est réchauffée après l'opération de mélange à une température > 95 °C, de préférence > 119 °C, par ailleurs de préférence > 120 °C puis est refroidie.

13. Procédé selon l'une quelconque des revendications 10 à 12,
**caractérisé en ce**
**que** de la protéine de lupin est utilisée avec une fraction massique de conglutine-γ dans la protéine de lupin ≤ 2,5 % et avec une fraction massique de conglutine-α et de conglutine-β dans la protéine de lupin ≥ 80 % pour la fabrication de l'émulsion.

14. Procédé selon l'une quelconque des revendications 10 à 13,
**caractérisé en ce**
**que** de la protéine de lupin est utilisée pour la fabrication de l'émulsion qui a été extraite de graines de lupin qui ont été soumises à un traitement avec du CO₂ supercritique ou avec de l'éthanol avant la séparation de la protéine.
